# EUROPÄISCHE PATENTSCHRIFT

(11) **EP 0 944 679 B1**
(45) Veröffentlichungstag und Bekanntmachung des Hinweises auf die Patenterteilung: **03.07.2002**
(21) Anmeldenummer: 97954378.2
(22) Anmeldetag: 11.12.1997
(51) Int. Cl.: C09D 133/00, C09D 167/00

(54) **ÜBERZUGSMITTEL, DEREN HERSTELLUNG UND VERWENDUNG**
COATING AGENT- THE MANUFACTURE AND USE THEREOF
AGENT DE REVETEMENT, SA PREPARATION ET SON UTILISATION

(30) Priorität: 14.12.1996 DE 19652144
(43) Veröffentlichungstag der Anmeldung: 29.09.1999
(73) Patentinhaber: E.I. DU PONT DE NEMOURS AND COMPANY, Wilmington Delaware 19898 (US)
(72) Erfinder: DUECOFFRE, Volker, D-42119 Wuppertal (DE); SCHUBERT, Walter, D-42349 Wuppertal (DE); HERRMANN, Friedrich, D-42117 Wuppertal (DE); FLOSBACH, Carmen, D-42287 Wuppertal (DE); LECKEBUSCH, Claudia, D-42115 Wuppertal (DE)
(74) Vertreter: Gille Hrabal Struck Neidlein Prop Roos
(86) Internationale Anmeldenummer: EP9706911
(87) Internationale Veröffentlichungsnummer: WO9827172

(56) Entgegenhaltungen:
- EP-A- 0 103 146
- US-A- 4 524 183

## Beschreibung

Die Erfindung betrifft wäßrige und/oder lösemittelhaltige Überzugsmittelzusammensetzungen, die für Überzüge, die bei erhöhter Temperatur eingebrannt werden und insbesondere zur Herstellung von Mehrschichtlackierungen, beispielsweise auf dem Kraftfahrzeugsektor, geeignet sind.

Aus der DE-A-30 22 996 ist ein Einbrennlack bekannt, bei dem carboxylgruppenhaltige Polymere, wie z.B. Acrylate auf Basis Acrylsäure oder Methacrylsäure und glycidylgruppenhaltiger Acrylate zu einer härtbaren Zusammensetzung vermischt sind.

In der WO 84/00771 ist ein Mehrkomponentensystem beschrieben, bei dem vier Bindemitteltypen miteinander vermischt und dann appliziert werden. Bei den Komponenten handelt es sich um hydroxylgruppenhaltiges Acrylat, Säureanhydrid, wobei mindestens 50 % Alkylhexahydrophthalsäureanhydride sind, Epoxidharz und Melaminharz. Die Systeme weisen einen hohen Festkörpergehalt auf.

In der DE-A-23 33 384 wird ein Bindemittel auf der Basis acrylierter Polyester beschrieben, die durch Polymerisation eines hydroxylgruppenhaltigen Acrylates in einem hydroxylgruppenhaltigen Polyester oder Alkydharz erhalten werden. Die Vernetzung kann mit Melaminharzen und gleichzeitig Epoxidharzen durchgeführt werden.

In der DE-A-38 00 389 wird die Modifizierung von Hydroxylgruppen aufweisenden Copolymerisaten mit Lactonen beschrieben, insbesondere mit epsilon-Caprolacton.

In der US-A-4 501 829 werden Polyester mit Hydroxyl- und Carboxylgruppen beschrieben, die mit Lactonen umgesetzt werden. Die Reaktion erfolgt an den Hydroxylgruppen. In der US-A-4 082 816 werden Zusammensetzungen aus mit Caprolacton modifizierten carboxylgruppenhaltigen (Meth)acrylcopolymeren und Melamin-Formaldehydharzen beschrieben.

Die bekannten Überzugsmittel führen teilweise zu Filmen mit hoher Härte und guter Wetterbeständigkeit. Jedoch genügen sie den ständig steigenden Anforderungen an hohe Säurebeständigkeit und Lösemittelresistenz nicht.

In der DE 44 16 282 werden Einbrennlacke beschrieben, die auf der Vernetzung von sauren Polyestern, die urethanisiert sind, mit Polyepoxiden beruhen. Auch die DE 42 37 658 beschreibt Carboxy-Epoxy-Lacke für Einbrennsysteme. Hier sind die Carboxygruppen mit Caprolacton zur Reaktivitätserhöhung kettenverlängert. Diese Systeme zeichnen sich durch ausgezeichnete Chemikalienbeständigkeit aus. Allen diesen Systemen ist gemeinsam, daß sie insbesondere in sehr hohen Schichtdicken zum Ablaufen neigen.

Die EP-A-0 509 392 und EP-A-0 517 536 beschreiben Pulverlackharze, in denen tert.-Butyl(meth)acrylat und Glycidylmethacrylat copolymerisiert sind. Diese Monomerenkombination soll zu erhöhter Reaktivität führen.

Aufgabe der Erfindung ist die Bereitstellung eines Bindemittelsystems, das zu wäßrigen und/oder lösemittelhaltigen Überzugsmitteln verarbeitet werden kann, die bei erhöhter Temperatur eingebrannt werden können und zu Überzügen mit guter Härte, guter Wetterbeständigkeit und hoher Elastizität führen, die zudem säurebeständig und lösemittelresistent sind. Die Überzugsmittel sollen zudem eine gute Applikationssicherheit (verringerte Ablaufneigung) auch bei hohen Schichtstärken aufweisen. Insbesondere sollen die Überzugsmittel keinerlei Einbrennvergilbung zeigen und eine hohe Lagerstabilität aufweisen. Eine wesentliche Forderung ist eine hohe Kochsicherheit.

Es hat sich gezeigt daß diese Aufgabe gelöst werden kann durch ein wäßriges oder lösemittelhaltiges Überzugsmittel, das ein Bindemittelsystem auf der Basis von carboxyfunktionellen (Meth)acrylcopolymeren und/oder Polyestern mit einem epoxidfunktionalisierten (Meth)acrylcopolymer als Vernetzer enthält, wobei das epoxidfunktionalisierte (Meth)acrylcopolymer unter Mitverwendung von tertiär-Butyl(meth)acrylat als Monomerbaustein hergestellt wurde.

Ein Gegenstand der Erfindung ist somit ein Überzugsmittel, enthaltend eine Bindemittelzusammensetzung, Lösemittel und/oder Wasser, sowie gegebenenfalls Pigmente und/oder Füllstoffe gegebenenfalls lackübliche Additive, das dadurch gekennzeichnet ist, daß die Bindemittelzusammensetzung enthält:
A) 25 bis 75 Gew.-% eines oder mehrerer carboxyfunktioneller (Meth)acrylcopolymer mit einem Zahlenmittel des Molekulargewichts von 1000 bis 3000 g/mol und/oder eines oder mehrerer carboxyfunktioneller Polyester mit einem errechneten des Molekulargewicht von 500 bis 4000 g/mol, deren Carboxyfunktionalität jeweils einer Säurezahl von 15 bis 300 mg KOH/g entspricht.
B) 25 bis 75 Gew.-% eines oder mehrerer epoxidfunktionalisierter (Meth)acrylpolymerer mit einem Zahlenmittel des Molekulargewichts von 200 bis 10000 g/mol, einem Epoxidäquivalentgewicht von 200 bis 700 und einer Glastemperatur von -20 bis 70°C, die unter Mitverwendung von 3 bis 50 Gew.-%, bezogen auf das Gesamtgewicht der Monomerbausteine, tertiär-Butyl(meth)acrylat als Monomerbaustein hergestellt wurden, wobei das Mengenverhältnis von A) und B) so gewählt ist, daß das molare Verhältnis ihrer reaktiven Gruppen 1:3 bis 3:1 beträgt,
C) 0 bis 60 Gew.-% eines oder mehrerer Polyole mit mindestens zwei Hydroxylfunktionen im Molekül, die von einer gegebenenfalls Hydroxylfunktionen aufweisenden Komponente A) verschieden sind,
D) 0 bis 40 Gew.-% mit Hydroxylgruppen unter Etherblldung vernetzenden Komponenten und/oder eines Vernetzers auf Triazinbasis,
E) 0 bis 40 Gew.-% eines oder mehrerer Polyisocyanate, die gegebenenfalls verkappt sein können,
F) 0 bis 60 Gew.-% einer Anhydridkomponente, bestehend aus mindestens einem organischen Polyanhydrid mit mindestens zwei cyclischen Carbonsäureanhydridgruppen pro Molekül,
G) 0 bis 20 Gew.-% eines oder mehrerer Reaktivverdünner mit einer Epoxyfunktion,
H) 0 bis 10 Gew.-% eines oder mehrerer Katalysatoren zur Katalyse der Reaktion von Carboxyl- und Epoxidgruppen,
wobei sich die Summe der Gew.-% der Komponenten A) bis H) auf 100 Gew.-% addiert.

Gemäß einer bevorzugten Ausführungsform der Erfindung beruht die Komponente B) auf einem (Meth)acrylcopolymeren, dem folgende Monomerbausteine zugrunde liegen:
b1) 5 bis 60 Gew.-% eines oder mehrerer epoxidfunktioneller olefinisch ungesättigter Monomerer, insbesondere Glycldyl(meth)acrylat,
b2) 3 bis 50 Gew.-% tertiär-Butyl(meth)acrylat,
b3) 0 bis 60 Gew.-% eines oder mehrerer aromatischer vinylfunktioneller Monomerer,
b4) 0 bis 20 Gew.-% eines oder mehrerer hydroxyfunktioneller (Meth)acrylmonomerer,
b5) 0 bis 92 Gew.-% eines oder mehrerer von b1) bis b4) unterschiedlicher Monomerer,
wobei sich die Summe der Gew.-% von b1) bis b5) auf 100 Gew.-% addiert.

Es hat sich überraschenderweise gezeigt, daß die erfindungsgemäßen wäßrigen oder lösemittelhaltigen Überzugsmittel zu Überzügen führen, die trotz einer zu erwartenden möglichen Bildung von Spaltprodukren während der fortgeschrittenen Vernetzungsreaktion eine hohe Kochsicherheit erreichen, wobei das Niveau der anderen aufgabengemäßen Forderungen unverändert hoch ist.

In der Komponente A) der erfindungsgemäßen Bindemittel- bzw. Überzugsmittelzusammensetzungen können die Carboxylgruppen durch Umsetzung mit Lactonen modifiziert sein. Durch die Anlagerung von Lactonen erfolgt eine "Kettenverlängerung" der Carboxylgruppen. Durch Ringöffnung des anzulagernden Lactons werden die ursprünglich am (Meth)acrylcopolymergerüst und/oder am Polyestergerüst befindlichen Carboxylgruppen verestert, wobei jedoch die Lacton-Carboxylgruppen freigesetzt werden und somit Reaktionsprodukte entstehen, die exponierte Carboxylgruppen an dem Lacton entsprechenden kurzen Seitenketten aufweisen.

Erfindungsgemäß weisen die gegebenenfalls urethangruppenhaltigen carboxyfunktionalisierten (Meth)acrylcopolymeren, die mit Lacton umgesetzt werden können, ein Zahlenmittel des Molgewichts (Mn) von 1000 bis 30000 g/mol auf. Die entsprechend einsetzbaren gegebenenfalls urethangruppenhaltigen carboxyfunktionalisierten Polyester weisen ein errechnetes Molgewicht von 500 bis 4000 g/mol. beispielsweise von 800 bis 4000 g/mol, auf. Die Säurezahl dieser Ausgangsmaterialien liegt bei 15 bis 300 mg KOH/g, bevorzugt bei 30 bis 250 mg KOH/g und besonders bevorzugt bei 60 bis 200 mg KOH/g.

Bei der Herstellung von als Komponente A) einsetzbaren carboxylgruppenhaltigen (Meth)acrylcopolymeren oder Polyester, die gegebenenfalls jeweils Urethangruppen enthalten können, können die Carboxylgruppen direkt durch Verwendung carboxylgruppenhaltiger Bausteine, beispielsweise beim Aufbau von Polymeren, wie (Meth)acrylcopolymeren, eingeführt werden. Beispiele für hierzu verwendbare geeignete carboxylgruppenhaltige Monomere sind ungesättigte Carbonsäuren, wie z.B. Acryl-, Methacryl-, Itacon-, Croton, Isocroton-, Aconit-, Malein- und Fumarsäure, Halbester der Malein- und Fumarsäure sowie Carboxyalkylester der (Meth)acrylsäure, z.B. beta-Carboxyethylacrylat und Addukte von Hydroxyalkylestern der Acrylsäure und/oder Methacrylsäure mit Carbonsäureanhydriden, wie z.B. der Phthalsäure-mono-2-(meth)acryloyloxyethylester.

In der vorliegenden Beschreibung und den Patentansprüchen wird der Ausdruck (Meth)acryl verwendet. Dieser bedeutet Acryl und/oder Methacryl.

Bei der Herstellung von carboxylgruppenhaltigen und gegebenenfalls urethangruppenhaltigen (Meth)acrylcopolymeren oder Polyestern ist es aber auch möglich, zunächst ein Hydroxylgruppen und gegebenenfalls auch schon Carboxylgruppen enthaltendes Polymer mit einer OH-Zahl von 15 bis 300 mg KOH/g aufzubauen und die Carboxylgruppen ganz oder teilweise in einer zweiten Stufe durch Umsetzen mit Carbonsäureanhydriden einzuführen. Bei dieser Arbeitsweise kann mit solchen Mengenverhältnissen gearbeitet werden, daß gegebenenfalls genügend OH-Gruppen übrig bleiben, um eine Urethanisierung durchführen zu können.

Für die Addition an die hydroxylgruppenhaltigen Polymeren, die bereits Carboxylgruppen enthalten können, geeignete Carbonsäureanhydride sind die Anhydride von aliphatischen, cycloaliphatischen und aromatischen gesättigten und/oder ungesättigten Di- und Polycarbonsäuren, wie beispielsweise die Anhydride der Phthalsäure, Tetrahydrophthalsäure, Hexahydrophthalsäure, Bernsteinsäure, Maleinsäure, Itaconsäure, Glutarsäure, Trimellithsäure und Pyromellithsäure sowie deren halogenierte oder alkylierte Derivate.

Bevorzugt eingesetzt werden Anhydride der Phthalsäure, Tetrahydro- und Hexahydrophthalsäure sowie 5-Methylhexahydrophthalsäureanhydrid.

Zur Einführung von Hydroxylgruppen in die gegebenenfalls urethangruppenhaltigen Poly(meth)acrylcopolymeren geeignete Monomere sind beispielsweise Hydroxylalkylester alpha,beta-ungesättigter Carbonsäuren, wie (Meth)acrylsäure, z.B. mit primären Hydroxylgruppen, wie z.B. Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Beispiele für verwendbare Hydroxyalkylester mit einer sekundären Hydroxylgruppe seien 2-Hydroxypropylacrylat, 2-Hydroxybutylacrylat, 3-Hydroxybutylacrylat und die entsprechenden Methacrylate genannt.

Vorteilhafterweise kann die hydroxylfunktionalisierte Komponente zumindest teilweise ein Umsetzungsprodukt aus einem Mol Hydroxyethylacrylat und/oder Hydroxyethylmethacrylat und durchschnittlich zwei Mol epsilon-Caprolacton sein.

Als hydroxyfunktiönalisierte Komponente kann zumindest teilweise auch ein Umsetzungsprodukt aus Acrylsäure und/oder Methacrylsäure mit dem Glycidylester einer Carbonsäure mit einem tertiären alpha-Kohlenstoffatom eingesetzt werden. Glycidylester stark verzweigter Monocarbonsäuren sind beispielsweise unter dem Handelsnamen "Cardura" erhältlich. Die Umsetzung der Acrylsäure oder Methacrylsäure mit dem Glycidylester einer Carbonsäure mit einem tertiären alpha-Kohlenstoff kann vor, während oder nach der Polymerisationsreaktion erfolgen.

Bei der Herstellung der (Meth)acrylcopolymeren können neben den vorstehend genannten Monomeren auch weitere ethylenisch ungesättigte Monomere verwendet werden. Die Auswahl der weiteren ethylenisch ungesättigten Monomeren ist nicht kritisch, es können die zur Polymerisation üblichen olefinischen Monomeren mit oder ohne weitere funktionelle Gruppen eingesetzt werden. Die Monomeren werden in dem Fachmann geläufiger Weise bevorzugt so ausgewählt. daß ihr Einbau nicht zu unerwünschten Eigenschaften des Copolymerisats führt.

Als weitere ethylenisch ungesättigte Monomere geeignet sind beispielsweise insbesondere Alkylester der Acryl- und Methacrylsäure, wie z.B. Methyl(meth)acrylat, Ethyl(meth)acrylat, Propyl(meth)acrylat, Butyl(meth)acrylat, Isopropyl(meth)acrylat, Isobutyl(meth)acrylat, tertiär-Butyl(meth)acrylat, Pentyl(meth)acrylat, Hexyl(meth)acrylat, Cyclohexyl(meth)acrylat, 2-Ethylhexyl(meth)acrylat, Octyl(meth)acrylat, 3.5.5-Trimethylhexyl(meth)acrylat, Decyl(meth)acrylat, Dodecyl(meth)acrylat, Hexadecyl(meth)acrylat, Octadecyl(meth)acrylat und Octadecenyl(meth)acrylat. Ebenso möglich ist die Verwendung von silanmodifizierten Monomeren, wie z.B. gamma-Methacryloxypropyltrimethoxysilan oder gamma-Hethacryloxpropyl-tris(2-methoxy-ethoxy)-silan.

Statt der vorstehend genannten Alkylester der Acryl- und Methacrylsäure oder zusammen mit diesen Alkylestern können zur Herstellung von (Meth)acrylcopolymerisaten weitere ethylenisch ungesättigte Monomere eingesetzt werden, wobei sich die Auswahl dieser Monomeren weitgehend nach den gewünschten Eigenschaften der Überzugsmittel in Bezug auf Härte, Elastizität, Verträglichkeit und Polarität richtet.

Beispiele für weitere, geeignete ethylenisch ungesättigte Monomere sind die Alkylester der Malein-, Fumar-, Tetrahydrophthal-, Croton-, Isocroton-, Vinylessig- und Itaconsäure, wie z.B. entsprechenden Methyl-, Ethyl, Propyl, Butyl, Isopropyl-, Isobutyl-, Pentyl-, Amyl-, Isoamyl-, Hexyl-, Cyclohexyl-, 2-Ethylhexyl-, Octyl-, 3,5,5-Trimethylhexyl-, Decyl-, Dodecyl-, Hexadecyl-, Octadecyl- und Octadecenylester.

Weiterhin können auch kleine Anteile Monomere mit mindestens zwei polymerisierbaren, olefinisch ungesättigten Doppelbindungen eingesetzt werden. Bevorzugt liegt der Anteil dieser Monomeren unter 5 Gew.-%, bezogen auf das Gesamtgewicht der Monomeren.

Beispiele für derartige Verbindungen sind Hexandioldiacrylat, Hexandioldimethacrylat, Ethylenglykoldiacrylat, Ethylenglykoldimethacrylat, Butandioldiacrylat, Butandioldimethacrylat, Hexamethylenbismethacrylamid, Trimethylolpropantriacrylat, Trimethylolpropantrimethacrylat und ähnliche Verbindungen.

Eine weitere geeignete Komponente sind monovinylaromatische Verbindungen. Vorzugsweise enthalten sie 8 bis 9 Kohlenstoffatome je Molekül. Beispiele für geeignete Verbindungen sind Styrol, Vinyltoluol, alpha-Methylstyrol, Chlorstyrol, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt. Ebenfalls möglich ist die Verwendung von silanmodifizierten Monomeren, wie z.B. gamma-Methacryloxypropyltrimethoxysilan oder gamma-Methacryloxypropyltris(2-methoxy-ethoxy)-silan.

Die Herstellung der copolymeren Bindemittelkomponente A) erfolgt durch radikalische Copolymerisation. Die Monomermenge wird dabei so abgestimmt, daß die gewünschten Spezifikationen bezüglich Molmasse, OH-Gruppen-Verhältnis, OH-Zahl und Säurezahl erzielt werden. Dabei kann es sich als vorteilhaft erweisen, einen Teil der Monomeren zeitversetzt zueinander zuzudosieren.

Zur Herstellung der Copolymeren können die Monomeren oder das eingesetzte Monomerengemisch Initiatoren enthalten. Sofern Initiatoren nicht in der Monomerenmischung enthalten sind, können sie zur Monomerenmischung gegebenenfalls geringfügig zeitversetzt zugesetzt oder separat zudosiert werden. Anschließend kann noch über einen längeren Zeitraum, z.B. während mehrerer Stunden nachpolymerisiert werden. Es ist dann möglich, mit einem üblichen Lacklösemittel auf einen gewünschten Feststoffgehalt, beispielsweise in der Größenordnung von 30 bis 60 Gew.-%, beispielsweise 50 Gew.-% einzustellen.

Die Herstellung erfolgt beispielsweise als radikalische Lösungspolymerisation in Anwesenheit eines Radikalinitiators, wie sie dem Fachmann geläufig ist. Beispiele für Radikalinitiatoren sind Dialkylperoxide, wie Di-tert.-Butylperoxid, Di-Cumylperoxid; Diacylperoxid wie Di-benzoylperoxid, Dilauroylperoxid; Hydroperoxide, wie Cumolhydroperoxid, tert.-Butylhydroperoxid; Perester, wie tert.-Butyl-perbenzoat, tert.-Butylperpivalat, tert.-Butyl-per-3,5,5-trimethylhexanoat, tert.-Butyl-per-2-ethyl-hexanoat; Peroxiddicarbonate, wie Di-2-ethylhexyl-peroxydicarbonat, Dicyclohexylperoxydicarbonat; Perketale, wie 1,1-Bis-(tert.-Butylperoxy)-3,5,5-trimethyl-cyclohexan, 1,1-Bis-(tert.-Butylperoxy)-cyclohexan; Ketonperoxide, wie Cyclohexanonperoxid, Methylisobutylketonperoxid und Azoverbindungen, wie 2,2'-Azo-bis-(2,4-dimethyl-valeronitril), 2,2'-Azo-bis-(2-Methylbutyronitril), 1,1,1-Azobis-cyclohexancarbonitril, Azo-bis-isobutyronitril, C-C-spaltende Initiatoren wie z.B. Benzpinakol-Derivate.

Die Polymerisationsinitiatoren werden im allgemeinen beispielsweise in einer Menge von 0,1 bis 4 Gew.-%, bezogen auf die Monomeren-Einwaage, zugesetzt.

Zur möglichen Urethanisierung der carboxyfunktionalisierten (Meth)acrylcopolymeren können in einem weiteren Reaktionsschritt OH-Funktionen der carboxylfunktionalisierten (Meth)acrylcopolymeren mit Mono-, Di-, Tri- oder Polyisocyanaten umgesetzt werden. Die Menge der Di-, Tri-, oder Polyisocyanate ist abhängig von der OH-Zahl des (Meth)acrylcopolymeren und wird in dem Fachmann geläufiger Weise so gewählt, daß ein Gelieren vermieden wird. Beispielsweise werden Copolymere mit einer OH-Zahl von 30 bis 100 mg KOH/g mit Di-, Tri- oder Polyisocyanaten derart umgesetzt, daß eine OH-Zahl des urethanisierten Copolymeren von 15 bis 80 mg KOH/g resultiert. Hierbei kann so vorgegangen werden, daß das carboxyl- und OH-funktionelle (Meth)acrycopolymere in einem aprotischen Lösemittel gelöst vorgelegt wird und anschließend das Di-, Tri- oder Poly-isocyanat, gegebenenfalls in einem aprotischen Lösemittel wie z.B. Xylol oder Butylacetat gelöst, in einem Zeitraum von z.B. 30 Minuten bis 3 Stunden z.B. bei 5°C bis 80°C zudosiert wird. Das Ende der Reaktion ist erreicht, wenn die NCO-Zahl des Reaktionsgemisches kleiner 0,1 ist. Im Falle der Verwendung von Monoisocyanaten ist keine bestimmte Menge an Isocyanat notwendig, hier können gegebenenfalls alle OH-Funktionen des (Meth)acrylcopolymeren umgesetzt werden. Die Reaktionsbedingungen sind die gleichen wie bei Di-, Tri- oder Polyisocyanaten. Natürlich ist es ebenfalls möglich, OH-funktionelle (Meth)acrylcopolymere vor der Einführung von Carboxylgruppen durch Umsetzung mit Säureanhydriden zu urethanisieren und erst anschließend die Säure anzulagern. Beispiele für Di-. Tri- und Polyisocyanate, die auch im Gemisch eingesetzt werden können, sind unter der Beschreibung der Komponente E) beschrieben.

Beispiele für Monoisocyanate sind z.B. Umsetzungsprodukte der später für die Komponente E) beschriebenen Diisocyanate mit Monoalkoholen wie Methanol, Butanol, Hexanol oder Octanol, wobei 1 mol Diisocyanat mit 1 mol Alkohol umgesetzt wird. Weitere Beispiele für Monoisocyanate sind alpha,alpha-Dimethyl-m-isopropenylbenzylisocyanat oder Isocyanato(meth)acrylat.

Die als Komponente A) einsetzbaren carboxylgruppenhaltigen und gegebenenfalls urethangruppenhaltigen Polyester können nach üblichen Methoden aufgebaut werden aus aliphatischen und/oder cycloaliphatischen Di-. Tri- oder höherwertigen Alkoholen, gegebenenfalls zusammen mit einwertigen Alkoholen und aus aliphatischen, aromatischen und/oder cycloaliphatischen Carbonsäuren, insbesondere Dicarbonsäuren, sowie höherwertigen Polycarbonsäuren. Beispiele für geeignete Alkohole sind aliphatische Diole, wie Ethylenglykol, 1,2-Propandiol, 1,3-Propandiol, 2,2-Diemthyl-1,3-propandiol, 1,2-Butandiol, 1,3-Butandiol, 1,4-Butandiol, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, mehrwertige aliphatische Alkohole, wie Glycerin, Trimethylolethan, Trimethylolpropan, Pentaerythrit, sowie Veretherungsprodukte von Diolen und Polyolen, z.B. Di- und Triethylenglykol, Polyethylenglykol, Neopentylglykolester von Hydroxypivalinsäure.

Beispiele für geeignete Carbonsäuren sind Adipin-, Azelain-, 1,3- und 1,4-Cyclohexandicarbonsäure, Tetrahydrophthal-, Hexahydrophthal-, Endomethyltetrahydrophthalsäure, Isophthalsäure, o-Phthalsäure, Terephthalsäure bzw. deren Anhydride sowie deren veresterungsfähige Derivate.

Die errechneten Molgewichte der Polyester liegen zwischen 500 und 2000 g/mol.

Die als Komponente A) verwendbaren carboxyfunktionellen (Meth)acrylcopolymerisate und Polyester können mit einem Lacton "kettenverlängert" sein, wie vorstehend schon erläutert. Die Lactone (cyclische Ester) lagern sich an Carboxylgruppen an, wobei der Ring geöffnet wird und eine neue endständige Carboxylgruppe entsteht. Da bei Anwesenheit von OH- und COOH-Gruppen die OH-Gruppen wesentlich schneller mit Lactonen reagieren, sind zur Herstellung der Komponente A) carboxyfunktionelle (Meth)acrylcopolymerisate und carboxyfunktionelle Polyester bevorzugt, die frei von OH-Gruppen sind. Wird zunächst von OH-Gruppen enthaltenden Copolymerisaten bzw. Polyestern ausgegangen, so werden deren OH-Gruppen bevorzugt ganz oder weitgehend mit Anhydriden zu Carbonsäuren umgesetzt. Ein Beispiel für ein besonders bevorzugtes Lacton ist das epsilon-Caprolacton.

Beispiele für andere Lactone sind gamma-Butyrolacton und Lactone, wie beta-Propiolacton, delta-Valerolacton, delta-Butyrolacton, zeta-Enantholacton, eta-Caprylolacton. Derartige Lactone können substituiert sein; Beispiele hierfür sind 6-Methyl-epsilon-caprolacton, 3-Methyl-epsilon-caprolacton, 5-Methyl-epsilon-caprolacton, 5-Phenol-epsiloncaprolacton, 4-Methyl-delta-valerolacton, 3,5-Dimethyl-epsiloncaprolacton, und Mischungen davon.

Die Umsetzung mit dem Lacton kann beispielsweise unmittelbar im Anschluß an die Harzsynthese, d.h. an die Synthese des Poly(meth)acrylcopolymerisats oder des Polyesters erfolgen. Die Reaktion erfolgt beispielsweise bei erhöhter Temperatur, beispielsweise bei Temperaturen bis zu 100°C. Die Reaktion kann beispielsweise unter Rühren beispielsweise bis zu 10 Stunden durchgeführt werden.

Ebenso wie die bereits beschriebenen carboxylfunktionalisierten (Meth)acrylcopolymeren können die carboxyfunktionalisierten Polyester urethanisiert werden. Die Reaktionsbedingungen und die verwendbaren Polyisocyanate sind die gleichen wie bei den (Meth)acrylcopolymeren. Möglich ist die Einführung der Urethangruppen durch 1. Umsetzung der carboxyl- und OH-funktionellen Polyester, 2. Umsetzung der lactonmodifizierten carboxylfunktionellen und OH-funktionellen Polyester mit Mono-, Di- oder Tri- oder Polyisocyanaten. Bevorzugt ist die Umsetzung von carboxyl- und OH-funktionellen Polyestern vor der Lactonisierung mit Polyisocyanaten. Hierbei ist es möglich, einen großen Teil oder die Gesamtmenge der OH-Gruppen zu urethanisieren, so daß diese OH-Gruppen im Falle der Lactonumsetzung nicht mehr in Konkurrenzreaktionen zu Carboxylgruppen eingehen können.

Ebenfalls möglich ist es, die Urethangruppen bei der Synthese der Polyester selbst einzuführen. Dies geschieht, indem Di- oder Tricarbonsäuren ganz oder teilweise gegen Di- oder Triisocyanate ausgetauscht werden.

Die oben genannten Wege 1) und 2) sind bevorzugt, besonders bevorzugt ist Weg 1). Beispiele für einsetzbare Mono-, Di-, Tri- oder Polyisocyanate werden bei der späteren Beschreibung der Komponente E) genannt.

Die erfindungsgemäßen Überzugsmittel enthalten als Komponente B) eines oder mehrere epoxidfunktionalisierte (Meth)acrylcopolymere. Es handelt sich dabei beispielsweise um Verbindungen mit mindestens zwei Epoxidfunktionen im Molekül. Letztere haben ein Epoxidäquivalentgewicht von 200 - 700, bevorzugt 250 - 500 und insbesondere 300 - 400, jeweils bezogen auf Festharz. Das Zahlenmittel des Molgewichtes (Mn) liegt bevorzugt bei 200 bis 10000 g/mol. Die Glastemperatur liegt bei -20°C bis 70°C, bevorzugt bei 0°C bis 50°C und insbesondere bei 5°C bis 40°C. Bevorzugt liegt die Obergrenze bei bis zu 50°C. beispielsweise bis zu 25°C.

Beispiele sind Glycidyl-funktionalisierte (Meth)acrylcopolymere. Beispiele hierfür sind Copolymere von Glycidyl(meth)acrylat oder 2,3-Epoxycyclopentylacrylat. Als Comonomere können Ester der (Meth)acrylsaure, wie z.B. Methyl-, Ethyl-, Butyl-, Isobutyl-, Ethylhexyl-, Cyclohexyl- und/oder Lauryl(meth)acrylat gewählt werden, hydroxyfunktionalisierte Ester der (Meth)acrylsäure wie z.B. Hydroxyethyl- und/oder Hydroxypropylester, weiterhin auch Styrol. Vinyltoluol und/oder alpha-Methylstyrol sowie alle alpha, betaungesättigten Monomere, wie sie bereits vorstehend für die Komponente A) beschrieben wurden. Das Zahlenmittel des Molgewichtes (Mn) kann beispielsweise zwischen 1000 und 10000 liegen, bevorzugt bei 2000 bis 5000. Weitere copolymerisierbare Glycidylmonomere sind z.B. (Meth)allylglycidylether oder 3,4-Epoxy-1-vinylcyclohexan. Die Herstellung der Copolymere erfolgt über radikalische Lösungspolymerisation, sie ist dem Fachmann bekannt und bedarf keiner weiteren Erläuterung.

Gemäß einer besonders bevorzugten Ausführungsform der Erfindung setzt sich mindestens eines dieser (Meth)acrylcopolymeren B) aus folgenden Monomeren zusammen:
b1) 5 bis 60 Gew.-% Glycidyl(meth)acrylat
b2) 3 bis 50 Gew.-% tertiär-Butyl(meth)acrylat
b3) 0 bis 60 Gew.-% eines oder mehrerer aromatischer vinylfunktioneller Monomerer
b4) 0 bis 20 Gew.-% eines oder mehrerer hydroxyfunktioneller (Meth)acrylmonomerer
b5) 0 bis 92 Gew.-% eines oder mehrerer von b1) bis b4) unterschiedlicher Monomerer

Beispiele für die als b3) bis b5) verwendbaren Monomere sind die vorstehend im Text erwähnten Monomere, die zur Herstellung der Poly(meth)acrylcopolymeren der Komponente A) verwendet werden können.

Im Falle der Herstellung eines Glycidyl(meth)acrylatcopolymeren kann es von Vorteil sein, daß in diese Copolymere schon ein Anteil an sauren Monomeren wie beispielsweise (Meth)acrylsäure mit einpolymerisiert wird. Dies kann z.B. bis zu einer Säurezahl von 3 bis 30 mg KOH/g Festharz erfolgen. Um ein unerwünschtes Gelieren des Harzes zu vermeiden ist es hier zweckmäßig die Polymerisationsbedingungen entsprechend moderat zu wählen. So ist es von Vorteil, eine Polymerisationstemperatur von beispielsweise 120°C nicht zu überschreiten und die Polymerisationsdauer möglichst kurz zu halten, z.B. bis zu 3 Stunden. Für milde Polymerisationsbedingungen sind hier Azoinitiatoren besonders geeignet.

Es ist auch möglich, die Bindemittelkomponenten A und B zumindest teilweise in einem weiteren Reaktionsschritt zu präkondensieren. Dies kann z.B. dadurch erfolgen, daß man die Komponenten A und B gemeinsam erhitzt. Den gewünschten Kondensationsgrad kann man beispielsweise an der Verringerung der Säurezahl ermitteln. Beispielsweise ist es möglich, unter Rühren, auf Temperaturen von beispielsweise 80 bis 120°C zu erhitzen und so lange weiterzurühren, bis die Säurezahl der Mischung um beispielsweise 2 bis 5 mg KOH/g Festharz gefallen ist. Selbstverständlich ist es auch möglich, die Säurezahl weiter zu reduzieren, dabei sollte jedoch darauf geachtet werden, daß die Viskosität der Mischung nicht bis zum Gelieren ansteigt. Durch die Präkondensation der Komponenten A) und B) kann die Lagerstabilität der Zusammensetzungen weiter erhöht werden. Die Präkondensation zwischen den Komponenten A) und C) ist ebenfalls möglich, die Bedingungen sind die gleichen wie bei der Kondensation von A) und B). Ebenfalls möglich ist es, das Bindemittel B) im Schoße des Bindemittels C) bzw. umgekehrt zu synthetisieren.

Hierzu ist es beispielsweise möglich einen Teil oder das gesamte Polyol der Komponente C) gegebenenfalls mit einem oder mehreren organischen Lösemitteln vorzulegen und darin die zur Herstellung der epoxidfunktionellen Komponente B) benötigten Monomeren oder einen Teil davon, umzusetzen. Beispielsweise können die Polyole C), gegebenenfalls mit Lösemittel, vorgelegt und erwärmt werden, beispielsweise auf Temperaturen in der Größenordnung von 140°C. Die zur Herstellung der epoxidfunktionellen Komponente B) benötigten Monomeren können, gegebenenfalls zusammen mit Initiatoren, zudosiert werden, beispielsweise während eines Zeitraum von bis zu 5 Stunden. Bei dieser Verfahrensweise wird als Polyol-Komponente C) bevorzugt ein Polyesterpolyol verwendet, insbesondere ein solches mit einem Zahlenmittel des Molekulargewichts Mn von 500 bis 4000, bevorzugt mit einer Säurezahl unter 15 mg KOH/g und bevorzugt mit einer OH-Zahl von 15 bis 300 mg KOH/g. Ein derartiges Schoßpolymerisat aus B) und C) kann gegenüber einer Mischung aus B) und C) Vorteile besitzen, wie beispielsweise eine bessere Verträglichkeit und eine homogenere Vermischung.

Die erfindungsgemäße Bindemittelzusammensetzung bzw. die erfindungsgemäßen Überzugsmittel können ein oder mehrere Polyole mit mindestens zwei Hydroxylfunktionen im Molekül als Komponente C) enthalten. Diese Polyole können beispielsweise ausgewählt werden aus den in der Beschreibung von A) und für die Herstellung von A) genannten OH-funktionellen Polyestern und (Meth)acrylcopolymeren. die gegebenenfalls auch urethanisiert sein können. Es kann sich dabei um solche handeln, die frei von Carboxylgruppen sind, oder die Carboxylgruppen enthalten. Letztere werden insbesondere dann eingesetzt. wenn die Komponente A) frei von Hydroxylgruppen ist.

Die erfindungsgemäße Bindemittelzusammensetzung bzw. die erfindungsgemäßen Überzugsmittel können als Komponente D) einen mit Hydroxylgruppen unter Etherbildung reagierenden Vernetzer enthalten. Es handelt sich dabei beispielsweise um ein oder mehrere Melaminharze. Beispiele hierfür sind in Wasser unlösliche butanol- oder isobutanolveretherte Melamine wie z.B. die Handelsprodukte Setamin ^{R} US 138 oder Maprenal ^{R} MF 610: mischveretherte Melamine. die sowohl butanol- als auch methanolverethert sind, wie z.B. Cymel ^{R} 254. sowie Hexamethyloxymethylmelamin (HMM-Melamine) wie z.B. Cymel ^{R} 301 oder Cymel ^{R} 303. wobei letzteren zur Vernetzung gegebenenfalls ein Säurekatalysator wie z.B. p-Toluolsulfonsäure zugesetzt werden kann.

Weitere Beispiele für Melaminharzvernetzer sind übliche hydrophile und damit wasserlösliche bzw. -verträgliche Melaminharze, wie z.B. methylveretherte Melamine wie z.B. Cymel ^{R} 325. Cymel ^{R} 327. Cymel ^{R} 350 und Cymel ^{R} 370. Maprenal ^{R} MF 927.

Die erfindungsgemäßen Bindemittelzusammensetzungen und Überzugsmittel können als Vernetzerkomponente D) auch einen Vernetzer auf Triazinbasis enthalten. Ein Beispiel dafür ist ein Triazin-Triscarbamat der allgemeinen Formel

C₃N₃(NHCOOR)₃

Hierbei kann R ein Alkylrest mit 1 bis 20 C-Atomen. ein Arylrest mit 6 bis 20 C-Atomen und/oder ein Aralkylrest mit 7 bis 20 C-Atomen sein. Die Reste R können gleich oder verschieden sein. Spezielle Beispiele für diese Carbamatvernetzer sind 2.4.6-Tris-(methoxycarbonylamino)-1,3,5-triazin und 2.4.6-Tris-(butoxycarbonylamino)-1,3,5-triazin.

Die erfindungsgemäßen Überzugsmittel können als mit OH-Gruppen Urethangruppen bildende Vernetzer (Komponente E) ein oder mehrere freie oder verkappte Polyisocyanate enthalten. Beispiele für einsetzbare Polyisocyanate sind cycloaliphatische, aliphatische oder aromatische Polyisocyanate wie Tetramethylendiisocyanat, Hexamethylendiisocyanat, 2,2,4-Trimethylendiisocyanat, 1,12-Dodecandiisocyanat, Cyclohexan-1,3-und 1,4-diisocyanat, 1-Isocyanato-3,3,5-trimethyl-5-isocyanatomethylcyclohexan (=Isophorondiisocyanat IPDI), Perhydro-2,4'und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4',4"-triisocyanat, Tetramethylxylylendiisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Erfindung geeignet sind die bekannten Polyisocyanate, die üblicherweise bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62 - 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisenden Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung.

In diesen bekannten Prepolymeren entspricht das Verhältnis von Isocyanatgruppen zu gegenüber NCO reaktiven Wasserstoffatomen bevorzugt 1,05 bis 10:1, besonders bevorzugt 1,1 bis 3:1, wobei die Wasserstoffatome vorzugsweise aus Hydroxylgruppen stammen.

Die Art und Mengenverhältnisse der bei der Herstellung von NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 bis 10000, vorzugsweise von 800 - 4000 aufweisen.

Die Polyisocyanate können als freie Polyisocyanate eingesetzt werden. In diesem Falle sind sie nicht verkappt. Bei den Überzugsmitteln handelt es sich dann um sogenannte Zweikomponentensysteme (2K-Systeme), bei denen die Polyisocyanate unmittelbar vor der Anwendung zugesetzt werden. Wenn die Isocyanatgruppierungen der Polyisocyanate vollständig verkappt sind, können die verkappten Polyisocyanate dem Überzugsmittel direkt zugesetzt werden. Die Überzugsmittel sind dann sogenannte Einkomponentensysteme (1K-Systeme).

Als Verkappungsmittel können übliche Verkappungsmittel verwendet werden, wie sie beispielsweise auf dem Lacksektor eingesetzt werden. Beispiele für verwendbare Verkappungsmittel sind Ester, wie Malonsäuredimethylester, Malonsäurediethylester, Acetessigsäureethylester, Lactame, wie epsilon-Caprolactam, Acetanilid, Acetylaceton, Acetonoxim, substituierte Pyrazole, wie Dimethylpyrazol, Propandiol-1,2 und/oder Oxime, wie Butanonoxim.

Die Verkappung der Polyisocyanate kann z.B. durch Erwärmen ein oder mehrerer Polyisocyanate mit dem Verkappungsmittel erfolgen. Beispielsweise können ein oder mehrere Polyisocyanate vorgelegt und unter Rühren erhitzt werden. z.B. auf etwa 80°C, und das Verkappungsmittel (beispielsweise während etwa 10 min.) zudosiert werden. Es wird solange gerührt, bis die NCO-Zahl kleiner als 0.1 % beträgt. Es ist auch möglich, ein oder mehrere Polyisocyanate mit einem Gemisch aus zwei oder mehreren Verkappungsmitteln zu verkappen.

Der Vorteil der Verwendung von zwei oder mehreren unterschiedlichen Polyisocyanaten und/oder zwei oder mehreren unterschiedlichen Verkappungsmitteln liegt darin. daß hiermit die Vernetzung über einen weiten Temperaturbereich erfolgen kann.

Werden unverkappte, freie Polyisocyanate in wäßrigen Systemen eingesetzt. so kann es vorteilhaft sein, die Polyisocyanate mit hydrophilen oder hydrophoben Gruppen auszustatten. Durch den Einsatz hydrophiler Polyisocyanate können diese leichter im Wasser dispergiert werden. Durch die Einführung hydrophober Gruppen erfolgt eine raschere Diffusion der hydrophobisierten Polyisocyanate in die Harzteilchen in wäßrigen Systemen.

Die erfindungsgemäße Bindemittelzusammensetzung und damit die erfindungsgemäßen Überzugsmittelzusammensetzungen können eine oder mehrere Anhydridkomponenten F) als zusätzliche, mit OH-Gruppen zu Estergruppen führende Vernetzer enthalten.

Die Komponente F) besteht aus mindestens einer organischen Verbindung, die mindestens zwei cyclische Carbonsäureanhydridgruppen pro Molekül aufweist. Der Gehalt dieser Verbindungen an Carbonsäureanhydridgruppen (formal berechnet als C₄O₃, Molekulargewicht = 96) liegt bevorzugt bei 5 bis 88 Gew.-%, besonders bevorzugt 6 bis 30 Gew.-%. Geeignet sind beispielsweise Trimellithsäureanhydrid-Addukte der allgemeinen Formel (1) 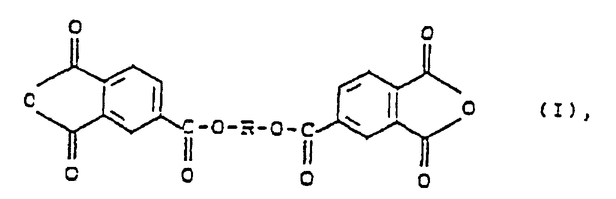 wobei R für einen zweiwertigen, gegebenenfalls Ethersauerstoffatome aufweisenden Kohlenwasserstoffrest mit 2 bis 12 Kohlenstoffatomen steht. In Betracht kommende Verbindungen der Formel (I) sind beispielsweise die entsprechenden Trimellithsäureanhydrid-Ester von Ethylenglykol, Propylenglykol, Diethylenglykol, Triethylenglykol, Neopentylglykol, Glycerin oder Trimethylolpropan.

Weitere geeignete Polyanhydride sind beispielsweise Benzophenontetracarbonsäuredianhydride der allgemeinen Formel (II) 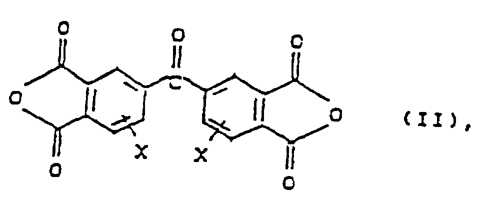 wobei X für Wasserstoff oder Halogen, NO₂, -COOH oder -SO₃H Substituenten steht und bei beiden aromatischen Kernen gleich oder verschieden sein kann. Beispiele dafür sind 3,3',4,4'-Benzophenontetracarbonsäuredianhydrid; 2-Brom-3,3',4,4'benzophenontetracarbonsäuredianhydrid oder 5-Nitro-3,3',4,4'benzophenontetracarbonsäuredianhydrid.

Weiterhin geeignet ist beispielsweise auch 1,2,4,5-Benzoltetracarbonsäuredianhydrid der Formel (III)

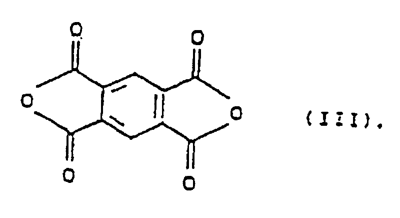

Besonders bevorzugt besteht die Komponente F) aus Copolymerisaten von olefinisch ungesättigten Monomeren, die pro Molekül im statistischen Mittel mindestens 2 cyclische Carbonsäureanhydridgruppen aufweisen. Bevorzugt handelt es sich hierbei um Copolymerisate von Maleinsäureanhydrid und/oder Itaconsäureanhydrid mit Comonomeren wie sie beispielsweise bei der Komponenten A) als Monomere zum Einsatz kommen und bereits oben beispielhaft offenbart sind. Besonders gut geeignet sind Copolymerisate, basierend auf Maleinsäureanhydrid, Styrol und/oder Alkylestern der Acryl- und/oder Methacrylsäure. Die Copolymerisate weisen vorzugsweise ein Zahlenmittel des Molgewichts (Mn) von 1500 bis 75000, vorzugsweise 2000 bis 50000 auf.

Ihre Herstellung kann z.B. in völliger Analogie zu der Herstellung der Copolymerisate A) erfolgen.

Ebenfalls enthalten sein können Monoepoxidverbindungen G), bevorzugt mit einem mittleren Molekulargewicht von bis zu 3000, besonders bevorzugt von kleiner 1000. Im Falle dieser niedrigen Molekulargewichte können diese Verbindungen das Viskositätsverhalten der hiermit erstellten Lacke sehr positiv beeinflussen, da sie hier dann sozusagen als Reaktivverdünner fungieren.

Beispiele für derartige Verbindungen sind z.B. Umsetzungsprodukte aus einer Diglycidylverbindung, z.B. eines Diglycidylethers, wie einem Mol Bisphenol-A-diglycidylether und einem Mol einer gesättigten oder ungesättigten Monocarbonsäure wie Essigsäure, Propionsäure oder Isononansäure. Weitere Beispiele sind Umsetzungsprodukte aus Hydroxyethylepoxiden, wie 1-Hydroxy-2,3-epoxypropan mit aromatischen Polycarbonsäuren, wie Phthal- oder Terephthalsäure zu den entsprechenden Polyestern, wie Phthal- oder Terephthalsäure-bis-(2,3-epoxypropylester) oder Umsetzungsprodukten von Digylcidylethern, wie Bisphenol-A-diglycidylether mit Säureanhydriden, wie Trimellithsäureanhydrid zu Polyestern mit einem Zahlenmittel des Molekulargewichts von 500 bis 3000, bevorzugt bis 1000. Weitere Beispiele sind Umsetzungsprodukte von Di- oder Polyepoxiden wie z.B. Polyglycidylether auf der Basis von Diethylenglykol, Dipropylenglykol, Polypropylenglykol mit einem Zahlenmittel des Molgewichts von bis zu 2000 und Triglycidylether von Glycerin und/oder Polyphenolen wie Bisphenol A oder F mit den genannten Monocarbonsäuren.

Besonders bevorzugt ist der Glycidylester der Versaticsäure mit dem Handelsproduktnamen Cardura E der Shell AG.

Die erfindungsemäße Bindemittelzusammensetzung und damit die erfindungsgemäßen Überzugsmittelzusammensetzungen können einen oder mehrere Katalysatoren (Komponente H) für die Umsetzung von Carboxylgruppen mit Epoxidgruppen enthalten. Es handelt sich insbesondere um in organischen Lösemitteln oder in Wasser lösliche oder mit organischen Materialien mischbare Katalysatoren. Beispiele für geeignete in organischen Lösemitteln oder mit organischen Materialien mischbare Katalysatoren sind Phosphoniumsalze, wie beispielsweise Ethyltriphenylphosphoniumacetat, -phosphat, -chlorid, -bromid, -jodid, Butyltriphenylphosphoniumacetat, -phosphat, -chlorid, -bromid, -jodid, Benzyltriphenylphosphoniumacetat, -phosphat, -chlorid, -bromid, -jodid und die quaternären Ammoniumsalze, wie beispielsweise Alkylbenzyldimethylammoniumchlorid, Benzyltrimethylammoniumchlorid, Methyltrioctylammoniumchlorid, Tetraethylammoniumbromid, N-Dodecylpyridiniumchlorid und Tetraethylammoniumiodid. Die bevorzugten in organischen Lösemitteln löslichen oder mit organischen Materialien mischbaren Katalysatoren sind Ethyltriphenylphosphonium-Acetat, -phosphat, -chlorid, -bromid, Butyltriphenylphosphoniumacetat, -phosphat, -chlorid, -bromid, Benzyltriphenylphosphoniumacetat, -phosphat, -chlorid, -bromid, und Methyltrioctylammoniumchlorid, Ethyltriphenylphosphoniumphosphat kann beispielsweise aus Ethyltriphenylphosphoniumacetat durch Reaktion mit Phosphorsäure erhalten werden. Weitere Katalysatorbeispiele sind Säuren, wie Sulfonsäuren, z.B. p-Toluolsulfonsäure. Es ist auch möglich, das glycidylfunktionalisierte Harz mit p-Toluolsulfonsäure umzusetzen, beispielsweise bei erhöhter Temperatur, bis zu beispielsweise 80°C. Hierbei wird die p-Toluolsulfonsäure unter Oxiran-Öffnung angelagert. Beim Einbrennen des fertigen Lackes wird die p-Toluolsulfonsäure zurückgespalten und kann die Vernetzung COOH/Epoxid katalysieren. Weitere Beispiele sind Dinonylnaphthalindisulfonsäure. Dinonylnaphthalinmonosulfonsäure und Dodecylbenzolsulfonsäure. Die Säurekatalysatoren können teilweise, ganz oder überneutralisiert werden. Mögliche Neutralisationsmittel sind tertiäre Amine, wie z.B. Triethylamin. Dimethylethanolamin oder Dimethyloxazolidin.

Der in organischen Lösemitteln und/oder Wasser lösliche oder mit organischen Materialien mischbare Katalysator kann in einer Menge von etwa 0 bis etwa 10 Gew.-%. vorzugsweise von 0.3 bis 2.0 Gew.-%. bezogen auf die Summe der Gewichte der Komponenten A) bis G) enthalten sein.

Ebenfalls ist es möglich, einen Aminkatalysator mit dem COOH-funktionalisierten (Meth)acrylcopolymerharzgemisch zu verknüpfen. Dies geschieht zweckmäßigerweise durch Copolymerisation von tert.-Amino(meth)acrylamidmonomeren bei der Synthese des COOH-funktionalisierten (Meth)acrylcopolymerharzes.

Beispiele für solche Monomere sind Dimethylaminoethyl(meth)acrylat. Diethylaminopropyl(meth)acrylat und Dimethylaminopropyl(meth)acrylatamid. Der mengenmäßige Anteil dieser (Meth)acrylate liegt bevorzugt bei 0.5 bis 10 Gew.-%. besonders bevorzugt 1 bis 5 Gew.-%. bezogen auf den Gesamtfeststoffgehalt des COOH-funktionalisierten (Meth)acrylcopolymerharzes.

Bei der Bereitung der erfindungsgemaßen Bindemittelzusammensetzung bzw. Überzugsmittelzusammensetzung werden die Mengenverhältnisse bevorzugt so gewählt. daß zwischen dem carboxylgruppenhaltigen Harz der Komponente A) und der Epoxidkomponente 8) ein molares Verhältnis der reaktiven Gruppen von 1:3 bis 3:1 vorliegt und daß bevorzugt zwischen der Summe der Gewichte der Komponenten A) bis C) und dem Gewicht der Komponente D) ein Verhältnis von 65:35 bis 98:2 bzw. oder zwischen der Summe der Gewichte der Komponenten A) bis C) und dem Gewicht der Polyisocyanatkomponente E) ein Verhältnis von 60:40 bis 95:5 herrscht.

Die erfindungsgemäßen Überzugsmittel können Lösemittel enthalten, wie sie beispielsweise für die Herstellung von Überzugsmitteln, beispielsweise Lacken üblich sind. Es kann sich auch um Lösemittel handeln, wie sie bei der Herstellung der Einzelkomponenten verwendet werden. Beispiele für derartige Lösemittel sind organische Lösemittel, insbesondere lackübliche Lösemittel wie aliphatische und aromatische Kohlenwasserstoffe, beispielsweise Toluol, Xylol, Gemische aliphatischer und/oder aromatischer Kohlenwasserstoffe, Ester, Ether und Alkohole. Zur Herstellung der Überzugsmittel aus den erfindungsgemäßen Bindemitteln können auch wäßrige Lösungen bereitet werden. Hierzu können gegebenenfalls geeignete Emulgatoren verwendet werden, wie sie auf dem Lacksektor üblich sind. Der Gehalt der Überzugsmittel an Lösemittel liegt z.B. bei 2 bis 20 Gew.-%.

Die erfindungsgemäß eingesetzten Bindemittelzusammensetzungen, sowie die erfindungsgemäßen Überzugsmittel können auch in wäßriger Form vorliegen, wobei sie frei von organischen Lösemitteln sind oder nur einen geringeren Anteil an organischen Lösemitteln aufweisen. Der Gehalt an Wasser liegt z.B. bei 10 bis 70 Gew.-%; der Gehalt an Lösemittel neben Wasser liegt z.B. bei 0 bis 20 Gew.-%. Zur Herstellung wäßriger Zusammensetzungen ist es beispielsweise möglich, die carboxylhaltige Komponente A) weitgehend von organischen Lösemitteln zu befreien, z.B. durch Destillation, anschließend einen Teil der Carboxylgruppen zu neutralisieren, z.B. mit Basen wie Triethylamin oder Dimethylethanolamin und dann in Wasser, das gegebenenfalls erwärmt ist, zu emulgieren. In diese Emulsion, in der die Komponente A) als Emulgatorharz wirkt, können dann gegebenenfalls die anderen Harze einemulgiert werden. Dies geschieht z.B. dadurch, daß das Emulgatorharz auf 60 - 80°C erwärmt und die ebenfalls auf 60 - 80°C erwärmten Hydroxy- und/oder epoxydfunktionellen Harze in 5 - 120 Minuten unter Rühren zugefügt werden. Die Zugabe aller anderen Haze sowie Lackadditive kann auch vor der Emulgierung erfolgen.

Ebenfalls möglich ist es beispielsweise auch, das weitgehend von Lösemitteln befreite COOH-funktionalisierte Harz der Komponente A) mit dem weitgehend vom Lösemittel befreite Epoxidharz zu mischen und in einem Wasser/Emulgator-Gemisch mittels einer Rotor/Stator-Anlage zu emulgieren. Ebenso ist es möglich, die Komponenten getrennt zu emulgieren und die Emulsion zu mischen. Mögliche Emulgatoren sind z.B. ethoxylierte Sorbitanfettsäureester.

Zur Herstellung der erfindungsgemäßen Überzugsmittel können Pigmente, Füllstoffe und/oder lackübliche Hilfs- und Zusatzstoffe zugesetzt werden. Es handelt sich dabei um lackübliche Additive, wie sie auf dem Lacksektor geläufig sind. Die Mengen liegen im üblichen, dem Fachmann geläufigen Bereich. Beispielsweise können die erfindungsgemäßen Überzugsmittel 2 bis 60 Gew.-% eines oder mehrerer Pigmente und/oder Füllstoffe enthalten. Die Menge der Additive liegt beispielsweise bei 0,01 bis 10 Gew.-%.

Beispiele für Pigmente sind farbgebende Pigmente wie Titandioxid oder Ruß und Effektpigmente wie Metallschuppenpigmente und/oder Perlglanzpigmente. Die erfindungsgemäßen Überzugsmittel enthalten Effektpigmente zusammen mit farbgebenden Pigmenten oder farbgebende Pigmente zusammen mit Füllstoffen. Beispiele für Füllstoffe sind lackübliche Füllstoffe, wie z.B. Talkum und Silikate. Beispiele für Additive sind Hilfs- und Zusatzstoffe wie Weichmacher, Lichtschutzmittel, Stabilisatoren und Verlaufsmittel, wie Silikonöle.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik und insbesondere Metall.

Die erfindungsgemäßen Überzugsmittel können nach bekannten Verfahren, wie z.B. Spritzen, Tauchen, Rollen oder Rakeln appliziert werden. Dabei wird auf das gegebenenfalls schon mit weiteren Lackschichten versehene Substrat der Überzug aus den erfindungsgemäßen Überzugsmitteln, beispielsweise als Decklacküberzug, aufgetragen. Nach einer Abdunstphase wird das applizierte Überzugsmittel durch Erwärmen vernetzt. Die Einbrenntemperaturen liegen z.B. bei 20 bis 180°C, bevorzugt bei 60 bis 150°C. Die Schichtdicke des eingebrannten Films beträgt beispielsweise 15 bis 60 µm. Dabei entsteht ein vernetzter harter, glänzender sowie säurebeständiger Lacküberzug.

Eine bevorzugte Ausführungsform ist die Applikation des erfindungsgemäßen Überzugsmittels als Klarlacküberzug auf einen Farbund/oder Effektpigmente enthaltenden Basislack. bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Mit den erfindungsgemäß pigmentfrei als Klarlacke formulierten Überzugsmitteln können beispielsweise Basislacke überlackiert werden, die übliche Decklackpigmente enthalten können; bevorzugt enthalten sie Effektpigmente. wie z.B. Metallic-Pigmente. Als Bindemittelbasis des Basislacks werden bevorzugt Polyester, Polyurethan- oder (Meth)acrylcopolymerharze eingesetzt. Diese Bindemittel können gegebenenfalls über Vernetzer, z.B. Melamin- oder Isocyanatderivate, vernetzt werden.

Es ist auch möglich, das erfindungsgemäße Überzugsmittel, insbesondere als Klarlack mit überkritischem Kohlendioxid als Lacklösemittel zu versetzen und zu applizieren.

Die erfindungsgemäßen Überzugsmittel können neben der Formulierung als Klarlacke auch als Basislacke, sowie auch als Füller formuliert werden. Sie eignen sich dann besonders gut zur Herstellung von Mehrschichtlackierungen, z.B. auf dem Kraftfahrzeugsektor. Zur Formulierung als Basislacke oder Füller können übliche Additive, wie sie z.B. vorstehend für Basislacke beschrieben wurden, zugesetzt werden.

Im Vergleich mit üblichen Basislacken ergeben die erfindungsgemäßen Basislacke insbesondere Überzüge mit einer verbesserten Feucht-Warm-Beständigkeit.

Die erfindungsgemäßen Basislacke können mit üblichen Klarlacken, naßin-naß, gegebenenfalls nach kurzer Antrocknung, überlackiert werden. Bevorzugt werden sie mit Klarlacken auf der Basis der erfindungsgemäßen Überzugsmittel überlackiert.

In den folgenden Beispielen beziehen sich Teile (T) und Prozent auf das Gewicht, sofern nicht anders angegeben.

### Beispiel 1)

### Herstellung eines Polyesteroligomeren (Ansgangsprodukt für Beispiel 3)

336,7 T Trimethylolpropan, 366,8 T Adipinsäure und 297 T Hexandiol werden mit 5 T hypophosphoriger Säure in einem mit Rührer, Abscheider, Thermometer und Rückflußkühler versehenen 2-Literdreihalskolben bei 180°C bis 230°C in der Schmelze auf eine Säurezahl von 20 mg KOH/g verestert.

Anschließend wird unter Vakuum bis zu einer Säurezahl kleiner 1,5 mg KOH/g kondensiert.

Das so erhaltene Produkt hat einen Einbrennrückstand von 94,5 % (1h, 150°C), eine Viskosität von 3200 mPa.s (100 %ig), eine Hydroxylzahl von 466 mg KOH/gFH und eine Farbzahl von 30 Hazen.

### Beispiel 2

### Herstellung eines epoxyfunktionellen Harzes B-1

In einem 4-Liter-Dreihalskolben, der mit Rührer, Thermometer, Tropftrichter und einem Rückflußkühler versehen ist, werden 990 T Xylol Solvesso 100 vorgelegt und unter Rühren auf 140°C erhitzt.

Innerhalb von 5 h wird eine Mischung aus
842,4 T Glycidylmethacrylat
300,0 T tertiär-Butylacrylat
348,6 T Styrol
383,4 T Butylacrylat
11,10 T di-tertiär-Butylperoxid
64,50 T tertiär-Butylperoxy-2-ethylhexanoat
zugetropft. Monomerenmischgefäß und Tropftrichter werden mit 60 T Solvesso nachgespült und dem Ansatz zugeführt. Im Anschluß daran wird 6 h bei 140°C nachpolymerisiert.

Das epoxyfunktionelle Harz hat einen Festkörpergehalt von 64,5 % (1 h, 150°C) und eine Viskosität von 1200 mPa.s.

### Herstellung eines epoxyfunktionellen Harzes B-2

In einen 4-Liter-Dreihalskolben, der mit Rührer, Thermometer, Tropftrichter und einem Rückflußkühler versehen ist, werden 990 T Solvesso 100 vorgelegt und unter Rühren auf 140°C erhitzt.

Innerhalb 5 h wird eine Mischung aus
842,40 T Glycidylmethacrylat
564,39 T Styrol
467,61 T Butylacrylat
11,10 T di-tertiär-Butylperoxid
64,50 T tertiär-Butylperoxy-2-ethylhexanoat
zugetropft. Monomerenmischgefäß und Tropftrichter werden mit 90 T Solvesso nachgespült und dem Ansatz zugegeben. Danach wird 6 h bei 140°C nachpolymerisiert.

Das Harz hat einen Festkörpergehalt von 64,5 % (1 h, 150°C) und eine Viskosität von 1100 mPa.s.

### Herstellung eines epoxyfunktionellen Harzes B-3

In einem 4-Liter-Dreihalskolben, der mit Rührer, Thermometer, Tropftrichter und einem Rückflußkühler versehen ist, werden 990 T Solvesso 100 vorgelegt und unter Rühren auf 140°C erhitzt.

Innerhalb von 5 h wird eine Mischung aus
842,40 T Glycidylmethacrylat
245,79 T Styrol
324,93 T Butylacrylat
300,00 T tertiär-Butylacrylat
161,28 T Hydroxyethylacrylat
11,10 T di-tertiär-Butylperoxid
64,50 T tertiär-Butylperoxy-2-ethylhexanoat
zugetropft. Monomerenmischgefäß und Tropftrichter werden mit 60 T Solvesso nachgespült und dem Ansatz zugeführt. Im Anschluß daran wird 6 h bei 140°C nachpolymerisiert.

Das epoxyfunktionelle Harz hat einen Festkörpergehalt von 64,5 % (1 h, 150°C) und eine Viskosität von 1600 mPa.s.

### Herstellung eines epoxyfunktionellen Harzes B-4

In einem 4-Liter-Dreihalskolben, der mit Rührer, Thermometer, Tropftrichter und einem Rückflußkühler versehen ist, werden 990 T Solvesso 100 vorgelegt und unter Rühren auf 140°C erhitzt.

Innerhalb von 5 h wird eine Mischung aus
842,40 T Glycidylmethacrylat
461,58 T Styrol
409,14 T Butylacrylat
161,28 T Hydroxyethylacrylat
11,10 T di-tertiär-Butylperoxid
64,50 T tertiär-Butylperoxy-2-ethylhexanoat
zugetropft. Monomerenmischgefäß und Tropftrichter werden mit 60 T Solvesso nachgespült und dem Ansatz zugeführt. Im Anschluß daran wird 6 h bei 140°C nachpolymerisiert.

Das epoxyfunktionelle Harz hat einen Festkörpergehalt von 64,5 % (1 h, 150°C) und eine Viskosität von 1650 mPa.s.

### Herstellung eines epoxyfunktionellen Schoßpolymeren B-5

In einem 4-Liter-Dreihalskolben, der mit Rührer, Thermometer, Tropftrichter und einem Rückflußkühler versehen ist, werden 990 T Solvesso 100 vorgelegt und 450 T des in Beispiel 1 beschriebenen Oligomeren vorgelegt und unter Rühren auf 140°C erhitzt.

Innerhalb von 5 h wird eine Mischung aus
842,40 T Glycidylmethacrylat
248,70 T Styrol
33,30 T Butylacrylat
300,00 T tertiär-Butylacrylat
11,10 T di-tertiär-Butylperoxid
64,50 T tertiär-Butylperoxy-2-ethylhexanoat
zugetropft. Monomerenmischgefäß und Tropftrichter werden mit 60 T Solvesso nachgespült und dem Ansatz zugeführt. Im Anschluß daran wird 6 h bei 140°C nachpolymerisiert.

Das epoxyfunktionelle Harz hat einen Festkörpergehalt von 64,5 % (1 h, 150°C) und eine Viskosität von 1400 mPa.s.

### Herstellung eines epoxyfunktionellen Schoßpolymeren B-6

In einem 4-Liter-Dreihalskolben, der mit Rührer, Thermometer, Tropftrichter und einem Rückflußkühler versehen ist, werden 990 T Solvesso 100 vorgelegt unt 450 T des in Beispiel 1 beschriebenen Oligomeren vorgelegt und unter Rühren auf 140°C erhitzt.

Innerhalb von 5 h wird eine Mischung aus
842,40 T Glycidylmethacrylat
7,67 T Styrol
574,32 T Butylacrylat
11,10 T di-tertiär-Butylperoxid
64,50 T tertiär-Butylperoxy-2-ethylhexanoat
zugetropft. Monomerenmischgefäß und Tropftrichter werden mit 60 T Solvesso nachgespült und dem Ansatz zugeführt. Im Anschluß daran wird 6 h bei 140°C nachpolymerisiert.

Das epoxyfunktionelle Harz hat einen Festkörpergehalt von 64,5 % (1 h, 150°C) und eine Viskosität von 1500 mPa.s.

### Beispiel 3)

### Synthese eines sauren Harzes A) auf Basis des Oligomeren aus Beispiel 1)

1101,6 T des Produktes aus Beispiel 1) und 300 T Xylol werden in einem 4-Liter-Dreihalskolben, der mit Rührer, Thermometer und einem Rückflußkühler versehen ist, mit 985,8 T Hexahydrophthalsäureanhydrid gemischt und bei 140°C bis auf eine konstante Säurezahl verestert. Anschließend werden 312,6 T epsilon-Caprolacton zugetropft. Die Umsetzung wird bei 140°C bis zum Erreichen des theoretischen Festkörpergehaltes durchgeführt. Nach beendeter Reaktion wird das Harz mit 300 T n-Butanol verdünnt.

Das carboxyfunktionelle Harz weist einen Einbrennrückstand von 79,6 % (1 h, 150°C), eine Säurezahl von 150 mg KOH/gFH und eine Viskosität von 1400 mPa.s auf.

### Herstellung eines Klarlackes

Zur Herstellung einer Klarlackzusammensetzung wird folgende Rezeptur verwendet:
38,80 T des epoxyfunktionellen Polymeren aus Beispiel 2) B-1,B-2,B-3,B-4, B-5 oder B-6
36,20 T des sauren Harzes A) aus Beispiel 3)
9,00 T n-Butanol
9.00 T Methoxypropanol
5.00 T Butyldiglykolacetat
0,4 T eines handelsüblichen Verlaufsmittels auf Silikonölbasis
1.6 T Lichtschutzmittel (1:1-Mischung aus Benztriazolderivat und sterisch gehindertem Amin)

Mit einer Mischung aus Methoxypropanol und Butylglykolacetat wird auf eine Spritzviskosität von 28 Sekunden AK₄-Auslaufbecher eingestellt. Auf ein Blech, das mit einem handelsüblichen Wasserfüller und einem handelsüblichen Wasserbasislack beschichtet ist, wird der Klarlack naß in naß mit einer Spritzpistole appliziert, 8 Minuten bei Raumtemperatur abgelüftet, 5 Minuten bei 80°C und anschließend 17 Minuten bei 140°C eingebrannt.

Mit den so erhaltenen Beschichtungen wurden die aufgelisteten Prüfungen durchgeführt und folgende Kennwerte erhalten:

| | Bsp. 2B-1 + Bsp. 3 | Bsp. 2B-2 + Bsp. 3 | Bsp. 2B-3 + Bsp. 3 | Bsp. 2B-4 + Bsp. 3 | Bsp. 2B-5 + Bsp. 3 | Bsp. 2B-6 +Bsp. 3 |
|---|---|---|---|---|---|---|
| Bemerkung | mit tBA ohne OH | ohne tBA ohne OH | mit tBA mit HEA | ohne tBA mit HEA | mit tBA Schopo | ohne tBA Schopo |
| Bleistifthärte | H | F | F | HB | F | B |
| MEK-Rub (Anz. Doppelhübe) | >100 | >100 | >100 | >100 | >100 | >100 |
| H₂SO₄ (10%, 65°C) erste Markierung nach X min. | 19 | 16 | 18 | 13 | 20 | 15 |
| Fülle, Glanz | hochbrillant | brillant | hochbrillant | brillant | hochbrillant | brillant |
| Kochgrenze [µm] | >48 | ab 37 | >46 | ab 38 | >50 | >39 |
| Ablaufgrenze [µm] | ab 42 | ab 37 | ab 43 | ab 33 | ab 40 | ab 33 |
| Kratzfestigkeit | sehr gut | gut | sehr gut | gut | exzellent | sehr gut |

## Patentansprüche

1. Überzugsmittel, enthaltend eine Bindemittelzusammensetzung, Lösemittel und/oder Wasser, sowie gegebenenfalls Pigmente und/oder Füllstoffe und gegebenenfalls lackübliche Additive, **dadurch gekennzeichnet, daß** die Bindemittelzusammensetzung enthält:
A) 25 bis 75 Gew.-% eines oder mehrerer carboxyfunktioneller (Meth)acrylcopolymerer mit einem Zahlenmittel des Molekulargewichts von 1000 bis 3000 g/mol und/oder eines oder mehrerer carboxyfunktioneller Polyester mit einem errechneten Molekulargewicht von 500 bis 4000 g/mol, deren Carboxyfunktionalität jeweils einer Säurezahl von 15 bis 300 mg KOH/g entspricht,
B) 25 bis 75 Gew.-% eines oder mehrerer epoxidfunktionalisierter (Meth)acrylcopolymerer mit einem Zahlenmittel des Molekulargewichts von 200 bis 10000 g/mol, einem Epoxidäquivalentgewicht von 200 bis 700 und einer Glastemperatur von -20 bis 70°C ist, die unter Mitverwendung von 3 bis 50 Gew.-%, bezogen auf das Gesamtgewicht der Monomerbausteine, tertiär-Butyl(meth)acrylat als Monomerbaustein, hergestellt wurden, wobei das Mengenverhältnis von A) zu B) so gewählt ist, daß das molare Verhältnis ihrer reaktiven Gruppen 1 : 3 bis 3 : 1 beträgt,
C) 0 bis 60 Gew.-% eines oder mehrerer Polyole mit mindestens zwei Hydroxylfunktionen im Molekül, die von einer gegebenenfalls Hydroxylfunktionen aufweisenden Komponente A) verschieden sind,
D) 0 bis 40 Gew.-% mit Hydroxylgruppen unter Etherbildung vernetzenden Komponenten und/oder eines Vernetzers auf Triazinbasis,
E) 0 bis 40 Gew.-% eines oder mehrerer Polyisocyanate, die gegebenenfalls verkappt sein können,
F) 0 bis 60 Gew.- % einer Anhydridkomponente, bestehend aus mindestens einem organischen Polyanhydrid mit mindestens zwei cyclischen Carbonsäureanhydridgruppen pro Molekül,
G) 0 bis 20 Gew.-% eines oder mehrerer Reaktivverdünner mit einer Epoxyfunktion,
H) 0 bis 10 Gew.-% eines oder mehrerer Katalysatoren zur Katalyse der Reaktion von Carboxyl- und Epoxidgruppen,
wobei sich die Summe der Gew.-% der Komponenten A) bis H) auf 100 Gew.-% addiert.

2. Überzugsmittel nach Anspruch 1, worin die Komponente B) auf 3 bis 50 Gew.-% tertiär-Butyl(meth)acrylat als Monomerbaustein, bezogen auf das Gesamtgewicht sämtlicher Monomerbausteine, beruht.

3. Überzugsmittel nach Anspruch 1 oder 2, worin die Komponente B) auf einem (Meth)acrylcopolymeren beruht, dem folgende Monomerbausteine zugrunde liegen:
b1) 5 bis 60 Gew.-% eines oder mehrerer epoxid-funktioneller olefinisch ungesättigter Monomerer, bevorzugt Glycidyl(meth)acrylat,
b2) 3 bis 50 Gew.-% tertiär-Butyl(meth)acrylat
b3) 0 bis 60 Gew.-% eines oder mehrerer aromatischer vinylfunktioneller Monomerer,
b4) 0 bis 20 Gew.-% eines oder mehrerer hydroxyfunktioneller (Meth)acrylmonomerer,
b5) 0 bis 92 Gew.-% eines oder mehrerer von b1) bis b4) unterschiedlicher Monomerer,
wobei sich die Summe der Gew.-% von b1) bis b5) auf 100 Gew.-% addiert.

4. Überzugsmittel nach einem der Ansprüche 1 bis 3, **dadurch gekennzeichnet, daß** es als Komponente A) ein oder mehrere carboxyfunktionelle (Meth)acrylcopolymere oder carboxyfunktionelle Polyester enthält, deren Carboxyfunktionen zumindest teilweise mit Lacton umgesetzt sind.

5. Überzugsmittel nach einem der Ansprüche 1 bis 4, **dadurch gekennzeichnet, daß** die Komponente B) ganz oder teilweise durch Polymerisation in Gegenwart der Komponente C) hergestellt wurde.

6. Verfahren zur Herstellung von Mehrschichtlackiemngen durch Auftrag einer Grundierung und gegebenenfalls einer oder mehrerer weiterer Zwischenschichten auf ein Substrat und anschließenden Auftrag eines Farb- und/oder Effektpigmente enthaltenden Basislacks mit anschließender Überlackierung mit einem Klarlack, wobei Basislack und Klarlack naß-in-naß aufgetragen und gemeinsam eingebrannt werden können, **dadurch gekennzeichnet, daß** als Basislack und/oder Klarlack ein Überzugsmittel gemäß einem der Ansprüche 1 bis 5 verwendet wird.

## Claims

1. Coating composition containing a binder composition, solvents and/or water and, optionally, pigments and/or fillers and, optionally, additives conventionally employed in lacquers, **characterised in that** the binder composition contains:
A) from 25 to 75 wt.% of one or more carboxy-functional (meth)acrylic copolymers having a number-average molecular weight of from 1000 to 3000 g/mol and/or of one or more carboxy-functional polyesters having a calculated molecular weight of from 500 to 4000 g/mol, the carboxy functionality of which corresponds in each case to an acid number of from 15 to 300 mg KOH/g,
B) from 25 to 75 wt.% of one or more epoxy-functionalised (meth)acrylic copolymers having a number-average molecular weight of from 200 to 10,000 g/mol, an epoxy equivalent weight of from 200 to 700 and a glass transition temperature of from -20 to 70°C, which have been prepared with the concomitant use of from 3 to 50 wt.%, based on the total weight of the monomer units, of tert-butyl (meth)acrylate as monomer unit, the relative proportion of A) to B) being so chosen that the molar ratio of their reactive groups is from 1:3 to 3:1,
C) from 0 to 60 wt.% of one or more polyols having at least two hydroxyl functions in the molecule, which are different from a component A) optionally having hydroxyl functions,
D) from 0 to 40 wt.% of components that crosslink with hydroxyl groups with ether formation, and/or of a triazine-based crosslinker,
E) from 0 to 40 wt.% of one or more polyisocyanates, which may optionally be masked,
F) from 0 to 60 wt.% of an anhydride component consisting of at least one organic polyanhydride having at least two cyclic carboxylic acid anhydride groups per molecule,
G) from 0 to 20 wt.% of one or more reactive diluents having an epoxy function,
H) from 0 to 10 wt.% of one or more catalysts for catalysis of the reaction of carboxyl groups and epoxy groups,
the sum of the wt.% of components A) to H) being 100 wt.%.

2. Coating composition according to claim 1, wherein component B) is based on from 3 to 50 wt.% of tert-butyl (meth)acrylate as monomer unit, based on the total weight of all the monomer units.

3. Coating composition according to claim 1 or 2, wherein component B) is based on a (meth)acrylic copolymer based on the following monomer units:
b1) from 5 to 60 wt.% of one or more epoxy-functional olefinically unsaturated monomers, preferably glycidyl (meth)acrylate,
b2) from 3 to 50 wt.% of tert-butyl (meth)acrylate,
b3) from 0 to 60 wt.% of one or more aromatic vinyl-functional monomers,
b4) from 0 to 20 wt.% of one or more hydroxy-functional (meth)acrylic monomers,
b5) from 0 to 92 wt.% of one or more monomers other than b1) to b4),
the sum of the wt.% of b1) to b5) being 100 wt.%.

4. Coating composition according to any one of claims 1 to 3, **characterised in that** it contains as component A) one or more carboxy-functional (meth)acrylic copolymers or carboxy-functional polyesters, the carboxy functions of which have been reacted at least partially with lactone.

5. Coating composition according to any one of claims 1 to 4, **characterised in that** component B) has been prepared wholly or partially by polymerisation in the presence of component C).

6. Method of producing multi-layer lacquer coatings by application to a substrate of a primer coating and, optionally, of one or more further intermediate layers and subsequent application of a base lacquer containing colour and/or effect pigments, which is subsequently covered with a clear lacquer, wherein the base lacquer and the clear lacquer can be applied wet-on-wet and stoved together, **characterised in that** a coating composition according to any one of claims 1 to 5 is used as the base lacquer and/or clear lacquer.

## Revendications

1. Agent de revêtement, contenant un composition liante, des solvants et/ou de l'eau, et éventuellement aussi des pigments et/ou des matières de charge, éventuellement des additifs usuels dans la technique des peintures, qui est **caractérisé en ce que** la composition liante contient :
A) de 25 à 75 % en poids d'un ou plusieurs copolymères (méth)acryliques à fonctionnalité carboxy, ayant une masse moléculaire moyenne en nombre de 1000 à 3000 g/mol, et/ou d'un ou plusieurs polyesters à fonctionnalité carboxy, ayant une masse moléculaire calculée de 500 à 4000 g/mol, la fonctionnalité carboxy de chacun correspondant à un indice d'acide de 15 à 300 mg KOH/g,
B) de 25 à 75 % en poids d'un ou plusieurs polymères (méth)acryliques à fonctionnalité époxyde ayant une masse moléculaire moyenne en nombre de 200 à 10 000 g/mol, une masse équivalente d'époxyde de 200 à 700 et une température de transition vitreuse de -20 à 70°C, qui ont été préparés par utilisation simultanée de 3 à 50 % en poids, par rapport au poids total des composants monomères, de (méth)acrylate de tert-butyle servant de composant monomère, le rapport pondéral de A) à B) étant choisi de façon que le rapport en moles de leurs groupes réactifs soit de 1:3 à 3:1,
C) de 0 à 60 % en poids d'un ou plusieurs polyols ayant dans leur molécule au moins deux fonctions hydroxyle, qui sont différents d'un composant A) comportant éventuellement des fonctions hydroxyle,
D) de 0 à 40 % en poids de composants assurant la réticulation de groupes hydroxyle avec formation d'un éther, et/ou d'un agent de réticulation à base de triazine,.
E) de 0 à 40 % en poids d'un ou plusieurs polyisocyanates, qui peuvent être éventuellement bloqués,
F) de 0 à 60 % en poids d'un composant anhydride, constitué d'au moins un polyanhydride organique ayant par molécule au moins deux groupes anhydride carboxylique cycliques,
G) de 0 à 20 % en poids d'un ou plusieurs diluants réactifs ayant une fonction époxy,
H) de 0 à 10 % en poids d'un ou plusieurs catalyseurs, pour catalyser la réaction des groupes carboxyle et époxyde,
le total des pourcentages en poids des composants A) à H) étant de 100 % en poids.

2. Agent de revêtement selon la revendication 1, dans lequel le composant B) se fonde sur 3 à 50 % en poids de (méth)acrylate de tert-butyle en tant que composant monomère, par rapport au poids total de l'ensemble des composants monomères.

3. Agent de revêtement selon la revendication 1 ou 2, dans lequel le composant B) se fonde sur un copolymère (méth)acrylique, constitué des composants monomères suivants :
b1) de 5 à 60 % en poids d'un ou plusieurs monomères à insaturation oléfinique et à fonctionnalité époxyde, en particulier le (méth)acrylate de glycidyle,
b2) de 3 à 50 % en poids de (méth)acrylate de tert-butyle,
b3) de 0 à 60 % en poids d'un ou plusieurs monomères à fonctionnalité vinylaromatique,
b4) de 0 à 20 % en poids d'un ou plusieurs monomères (méth)acryliques à fonctionnalité hydroxy,
b5) de 0 à 92 % en poids d'un ou plusieurs monomères différents de b1) à b4),
le total des pourcentages en poids de b1) à b5) étant de 100 % en poids.

4. Agent de revêtement selon l'une des revendications 1 à 3, **caractérisé en ce qu'**il contient en tant que composant A) un ou plusieurs copolymères (méth)acryliques à fonctionnalité carboxy ou polyesters à fonctionnalité carboxy, dont les fonctions carboxy ont au moins partiellement réagi avec une lactone.

5. Agent de revêtement selon l'une des revendications 1 à 4, **caractérisé en ce que** le composant B) a été préparé en totalité ou en partie par polymérisation en présence du composant C).

6. Procédé de préparation de systèmes de vernis multicouches par application d'une couche de fond et éventuellement d'une ou plusieurs autres couches intermédiaires sur un subjectile, puis application d'un vernis de base, contenant des pigments colorés et/ou à effets décoratifs, avec recouvrement ultérieur par un vernis transparent, le vernis de base et le vernis transparent pouvant être appliqués mouillé sur mouillé et être cuits au four en commun, **caractérisé en ce qu'**on utilise en tant que vernis de base et/ou vernis transparent un agent de revêtement selon l'une des revendications 1 à 5.
